# EUROPEAN PATENT SPECIFICATION

(11) **EP 4 550 117 B1**
(45) Date of publication and mention of the grant of the patent: **28.01.2026**
(21) Application number: 24167743.4
(22) Date of filing: 28.03.2024
(51) Int. Cl.: G06F 8/34, G06F 8/35, G06F 8/36, G06F 9/54

(54) **COMMON ARTIFACT MODELER**
GEMEINSAMER ARTEFAKT-MODELLIERER
MODELERATEUR D'ARTEFACTS COMMUNS

(30) Priority: 30.10.2023 IN 202311073656; 12.12.2023 US 202318536806
(43) Date of publication of application: 07.05.2025
(73) Proprietor: SAP SE, 69190 Walldorf (DE)
(72) Inventor: GONSALVES, Prajwal, 69190 Walldorf (DE); SIDDA, Mrutyunjay Padmasali, 69190 Walldorf (DE); PATIL, Ruturaj, 69190 Walldorf (DE); HEGDE, Lavanya, 69190 Walldorf (DE)
(74) Representative: Müller-Boré & Partner Patentanwälte PartG mbB

(56) References cited:
- US-A1- 2020 409 665
- US-A1- 2023 266 969

## Description

### BACKGROUND

Many organizations are increasingly dependent on software user interface (UI) applications, executed on-premise or in the cloud, that are developed to address their needs with respect to managing day-to-day activities of the organization. Capabilities, provided by an integration platform or other product, may be used to build and integrate these applications (and systems) with each other. A central hub may be provided to access the capabilities, each capability may be directed to addressing its own functionality, with its own distinct terminology, user interfaces, icons etc.. As a non-exhaustive example, in an integration flow capability, there may be a "client" and a "target endpoint", while in an Application Programming Interface (API) capability, the "client" is replaced by "sender" and the "target endpoint" is replaced by "receiver". These differences may make it challenging for a user to use multiple capabilities, some of which may be used together to address a particular need.

Systems and methods are desired to make it easier to use multiple applications in a suite of applications.

US 2020/409665 A1 describes methods and systems for enabling seamless integration between multiple products as a common layer by using a common visual modeler. An example system may include an application server and a common visual modeler. The common visual modeler may include a visual modeling environment for building an application by an end user. The visual modeling environment may include a modeler for creating the application, wherein the modeler comprises at least one component from at least one enterprise software product, the at least one component comprising at least one UI-based modeling tool for creating at least one artifact and a configuration module for managing settings of the at least one component. The common visual modeler may also include a server runtime environment for executing the application, the server runtime environment comprising at least one runtime engine for the at least one artifact created by the modeler.

US 2023/266969 A1 describes methods and systems may provide integration adapter generation for a cloud computing environment. The system may include a smart adapter user interface component that receives a standard, programming language-agnostic interface specification. The smart adapter user interface component may then graphically interact with a user via a guided navigation, no-code wizard user interface to collect additional information associated with the standard, programming language-agnostic interface specification. A semantic model is then automatically generated by the smart adapter user interface component based on characteristics of the received standard, programming language-agnostic interface specification and the additional information. A smart adapter generator may receive the semantic model along with information about the standard, programming language-agnostic interface specification and automatically generate a Cloud Integration adapter.

### BRIEF DESCRIPTION OF THE DRAWINGS

Features and advantages of the example embodiments, and the manner in which the same are accomplished, will become more readily apparent with reference to the following detailed description taken in conjunction with the accompanying drawings.
FIG. 1 is a block diagram of an architecture according to some embodiments.
FIG. 2 is a flow diagram of a process according to some embodiments.
FIG. 3 is a user interface which includes an initial welcome page according to some embodiments.
FIG. 4 is a user interface after selection of a capability in FIG. 3 according to some embodiments.
FIG. 5 is a user interface after selection of an artifact type in FIG. 4 according to some embodiments.
FIG. 6 is a user interface after selection of a first policy according to some embodiments.
FIG. 7 is a user interface for defining the policy selected in FIG. 6 according to some embodiments.
FIG. 8 is a user interface including selection of a second policy according to some embodiments.
FIG. 9 is a mapping table according to some embodiments.
FIG. 10 is block diagram of a runtime architecture according to some embodiments.
FIG. 11 is a block diagram of a cloud-based database deployment architecture according to some embodiments.

Throughout the drawings and the detailed description, unless otherwise described, the same drawing reference numerals will be understood to refer to the same elements, features and structures. The relative size and depiction of these elements may be exaggerated or adjusted for clarity, illustration, and/or convenience.

### DETAILED DESCRIPTION

The underlying technical problem is solved by the subject-matter having the features of the independent claims. Additional embodiments are defined in the dependent claims.

In the following description, numerous details are set forth for the purpose of explanation. However, one of ordinary skill in the art should understand that embodiments may be practiced without the use of these specific details. In other instances, well-known structures and processes are not shown or described in order not to obscure the description with unnecessary detail. It should be appreciated that in development of any such actual implementation, as in any engineering or design project, numerous implementation-specific decisions must be made to achieve the developer's specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

One or more embodiments or elements thereof can be implemented in the form of a computer program product including a non-transitory computer readable storage medium with computer usable program code for performing the method steps indicated herein. Furthermore, one or more embodiments or elements thereof can be implemented in the form of a system (or apparatus) including a memory, and at least one processor that is coupled to the memory and operative to perform exemplary method steps. Yet further, in another aspect, one or more embodiments or elements thereof can be implemented in the form of means for carrying out one or more of the method steps described herein; the means can include (i) hardware module(s), (ii) software module(s) stored in a computer readable storage medium (or multiple such media) and implemented on a hardware processor, or (iii) a combination of (i) and (ii); any of (i)-(iii) implement the specific techniques set forth herein.

As described above, an organization may use different systems and applications to perform the day-to-day operations of the organization. Capabilities, provided by an integration platform or otherwise, may be used to build and integrate the different systems used by the organization. As non-exhaustive example, an Application Programming Interface (API) management capability may allow the user to get access to simple, scalable and secure digital assets through APIs. Using the API management capability, for example, the user may build APIs by exposing selective data and may handle security and authorizations required to protect, analyze and monitor their services. The API management capability may allow the user to create API designs based on open standard, including OData and the OpenAPI specification, customize and extend models, publish APIS, and protect the APIs by guarding against security threats, manage traffic, and cache data on the edge. Another non-exhaustive example of a capability is a Cloud Integration capability that may allow a user to build and run integration flows across cloud, on-premise and hybrid landscapes, where the integration provides for the processing of messages in real-time scenarios, spanning different companies, organizations or departments within one organization. The Cloud Integration capability may provide for the design and configuration of integration steps and the management of their endpoints.

It is noted that while the API management capability and the Cloud Integration capability are the examples used herein, they are non-exhaustive and embodiments may be applicable to other suitable capabilities including, but not limited to, an Exchanging Data Capability, a Managing and Providing Integration Technology Guidance Capability, an Assessing Migration Scenarios Capability, etc. Execution of each of the capabilities may output an artifact. As used herein, an artifact may be a tangible output of the capability and may be referred to as a "use case." The artifact is an API proxy. Non-exhaustive examples of an artifact, which are not covered by the claims, is an integration flow, an API, a SOAP API, a Value Mapping, a message mapping, a data type, a message type, a data model, a prototype, a workflow diagram, a design document, a file, source code, executable, configuration files, etc.

With the API management capability, a modeler may be provided whereby the user may create API proxies and manage the policies for this API proxy. The API proxy sits between a client and an API, providing an access point to the API with additional functionality, such as security, caching, or rate limiting, without requiring changes to the API. The API is a type of software interface that allows two computers or two computer programs/applications to interact with each other without any user intervention. The API is a collection of software functions/procedures (code) that help two different softwares communicate and exchange data with each other. Developers and other users at an organization may build APIs to allow end users to interface with and consume data from different applications. However, the organization may want to limit access to the API since the API accesses the organization's backend server. The API proxy is used to limit the access to the API. The API proxy modeler may be used to configure different policies, add policies to the request, response, error flows and configure target endpoints. For example, the API proxy modeler may include a proxy endpoint preflow and a proxy endpoint post flow. A flow may define a processing pipeline that can control and channel how the API (or other capability) behaves and the information it carries. The API proxy terminology may include a request flow and a response flow. The user may apply one or more policies to a flow. A policy is a step that executes during runtime. A policy may be created on a particular flow segment or an existing policy may be attached to a flow segment. A sequence of policies may be applied to a particular flow segment and they may be executed in a same order in which they are applied. Non-exhaustive examples of policies are security policies (e.g., basic authentication, decode Jason Web Token (JWT), generate JWT, Java Script Object Notation (JSON) Threat Protection, Extensible Markup Language (XML) Threat Protection etc.), traffic management policies (e.g., access control, invalidate cache, populate cache, quota, reset quota, response cache, etc.), mediation policies (e.g., access entity, etc.). It is noted that each policy has its own configuration.

Conventionally, a user may first use a Cloud Integration capability including a Cloud integration modeler to create an integration flow, model the mediation steps, configure these steps and add any authorizations and endpoints. Then, the user may navigate to the API management capability and use an API management modeler to create an API proxy for the designed integration, add API proxy policies, and configure them. In this scenario, two different artifacts have been created using two different modelers, each with their own life-cycle, to design an end-to-end proxy use case. The user of the different capabilities for one use case may be challenging for the user. It is also noted that it may be challenging for a user who has experience with one capability to then use another capability.

Embodiments address this by providing a common modeler tool that provides a unified canvas, property sheet and palette that may be used by the different capabilities to generate their respective artifacts. The palette may include one or more components. The palette may be configurable based on the type of capability, such that particular components are provided based on the type of capability. For example, in an API proxy capability, a security authorization component may be included in the palette, while in an integration capability, a content converter component may be included in the palette. It is noted that the authorization component may not be provided for the integration capability and the content converter component may not be provided for the API proxy capability. The common modeler tool may provide for the user to model both an integration flow and an API proxy, for example, in a same way, so that the user only has to learn one process for creating the artifacts (e.g., reducing the learning curve of using different modelers). The common modeler tool may be configurable for different capabilities. Within the common modeler tool, components may be disabled or enabled as per the selected capability. The common modeler tool may also be easily extendable for future artifacts produced by other capabilities. The common modeler tool may also provide for reduced code maintenance as only a single modeler is maintained with respect to updates and fixes as compared to conventional systems that use a different modeler for each capability. Pursuant to some embodiments, the code used with the individual modelers for the different capabilities may be used by the common modeler tool with respect to the configuration of the capabilities.

In some examples, the embodiments herein may be incorporated within software that is deployed on a cloud platform.

The environments described herein are merely exemplary, and it is contemplated that the techniques described may be extended to other implementation contexts.

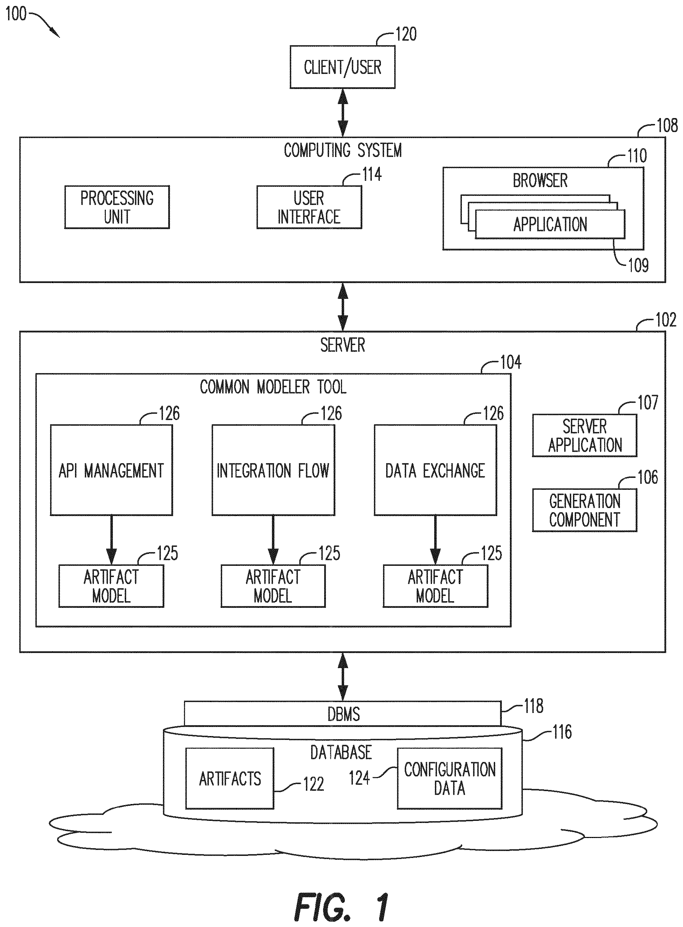

FIG. 1 is a block diagram of a system architecture 100 according to some embodiments. The illustrated elements of system architecture 100 and of all other architectures depicted herein may be implemented using any suitable combination of computing hardware and/or software that is or becomes known. Such combinations may include one or more programmable processors (microprocessors, central processing units, microprocessor cores, execution threads), one or more non-transitory electronic storage media, and processor-executable program code. In some embodiments, two or more elements of system architecture 100 are implemented by a single computing device, and/or two or more elements of system architecture 100 are co-located. One or more elements of system architecture 100 may be implemented using cloud-based resources, and/or other systems which apportion computing resources elastically according to demand, need, price, and/or any other metric.

System architecture 100 includes a backend server 102 including a common modeler tool 104 and generation component 106, a local computing system 108 including a browser 110 running a client application 109, and user interface 114. System architecture 100 also includes a database 116, a database management system (DBMS) 118, and a client/user 120. As used herein, the terms "client", "user" and "end-user" may be used interchangeably.

The backend server 102 may include server applications 107. Server applications 107 may comprise server-side executable program code (e.g., compiled code, scripts, etc.) executing within the backend server 102 to receive queries/requests from clients/users 120, via the local computing system 108, and provide results to clients/users 120 based on the data of database 116, and the output of the common modeler tool 104. Server applications 107 may provide functionality (e.g., receiving a request via a drag-and-drop operation, data entry, and then retrieving data from the database 116 based on the request, processing the retrieved data and providing the data via the user interface 114 to clients/users 120).

The backend server 102 may provide any suitable interfaces through which clients/users 120 may communicate with the common modeler tool 104 or applications 107/109 executing thereon. The backend server 102 may include a Hyper Text Transfer Protocol (HTTP) interface supporting a transient request/response protocol over Transmission Control Protocol/Internet Protocol (TCP/IP), a WebSocket interface supporting non-transient full-duplex communications which implement the WebSocket protocol over a single TCP/IP connection, and/or an Open Data Protocol (OData) interface. Backend server 102 may be separated from or closely integrated with DBMS 118. A closely-integrated backend server 102 may enable execution of applications 107 completely on the database platform, without the need for an additional server. For example, backend server 102 may provide a comprehensive set of embedded services which provide end-to-end support for Web-based applications. Backend server 102 may provide application services (e.g., via functional libraries) which applications 107 may use to manage and query the database files stored in the database 116. The application services can be used to expose the database data model, with its tables, hierarchies, views and database procedures, to clients/users 120. In addition to exposing the data model, backend server 102 may host system services such as a search service, and the like.

Local computing system 108 may comprise a computing system operated by local user 120. Local computing system 108 may comprise a laptop computer, a desktop computer, or a tablet computer, but embodiments are not limited thereto. Local computing system 108 may consist of any combination of computing hardware and software suitable to allow local computing system 108 to execute program code to cause the local computing system 108 to perform the functions described herein and to store such program code and associated data.

Generally, local computing system 108 executes one or more of applications 109 to provide functionality to client/user 120. Applications 109 may comprise any software applications that are or become known, including but not limited to integration applications. As will be described below, applications 109 may comprise web applications which execute within a web browser 110 of local computing system 108 and interact with corresponding server applications 107 to provide desired functionality. The client application 109 may send a user interface request (or other suitable request) to a server-side or back-end application ("server application") 107 for execution thereof. For example, when a user clicks on a button or enters information via a UI of the client application 109, a request is sent to the backend server 102. The backend server then responds with what needs to be rendered/content that is then provided to the client application. The user 120 may interact with the resulting displayed user interface 114 output from the execution of applications, to design and create artifacts and then deploy those artifacts.

The client/user 120 may access the common modeler tool 104 executing with the backend server 102 to generate one or more artifacts 122. The common modeler tool 104 may provide for the design and creation of an artifact model 125 for each of a plurality of capabilities 126. After creating the artifact model 125 with the common modeler tool 104, the artifact 122 is built by the generation component 106, based on the artifact model 125.

The common modeler tool 104 may access data in the database 116 and retrieve the data so that it is provided at runtime. While discussed further below, the database 116 may store data representing artifacts 122, configuration data 124 for each capability and other suitable data. Selection of a capability and an artifact type for generation may result in the common modeler tool 104 retrieving configuration data 124 from the database 116 and presentation of the components representing the configuration data 124 on the user interface for that selected artifact type, as described further below. Database 116 represents any suitable combination of volatile (e.g., Random Access Memory) and non-volatile (e.g., fixed disk) memory used by the system to store the data.

One or more applications 107/109 executing on backend server 102 or local computing system 108 may communicate with DBMS 118 using database management interfaces such as, but not limited to, Open Database Connectivity (ODBC) and Java Database Connectivity (JDBC) interfaces. These types of applications 107/109 may use Structured Query Language (SQL) to manage and query data stored in database 116.

DBMS 118 serves requests to store, retrieve and/or modify data of database 116, and also performs administrative and management functions. Such functions may include snapshot and backup management, indexing, optimization, garbage collection, and/or any other database functions that are or become known. DBMS 118 may also provide application logic, such as database procedures and/or calculations, according to some embodiments. This application logic may comprise scripts, functional libraries and/or compiled program code. DBMS 118 may comprise any query-responsive database system that is or becomes known, including but not limited to a structured-query language (i.e., SQL) relational database management system.

Database 116 may store data used by at least one of: applications 107/109 and the common modeler tool 104. For example, database 116 may store the configuration data mapped to a particular artifact, which may be accessed by the common modeler tool 104 during execution thereof.

Database 116 may comprise any query-responsive data source or sources that are or become known, including but not limited to a structured-query language (SQL) relational database management system. Database 116 may comprise a relational database, a multidimensional database, an extensible Markup Language (XML) document, or any other data storage system storing structured and/or unstructured data. The data of database 116 may be distributed among several relational databases, dimensional databases, and/or other data sources. Embodiments are not limited to any number or types of data sources.

Presentation of a user interface as described herein may comprise any degree or type of rendering, depending on the type of user interface code generated by the backend server 102/local computing system 108.

For example, the client/user 120 may execute the browser 110 to request and receive a Web page (e.g., in HTML format) from a server application 107 of backend server 102 to provide the user interface 114 via HTTP, HTTPS, and/or WebSocket, and may render and present the Web page according to known protocols.

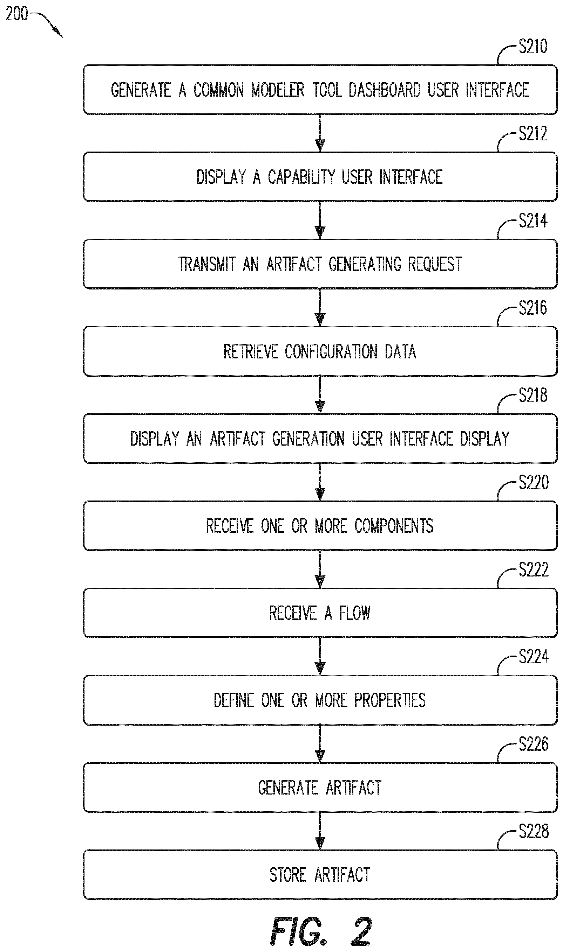

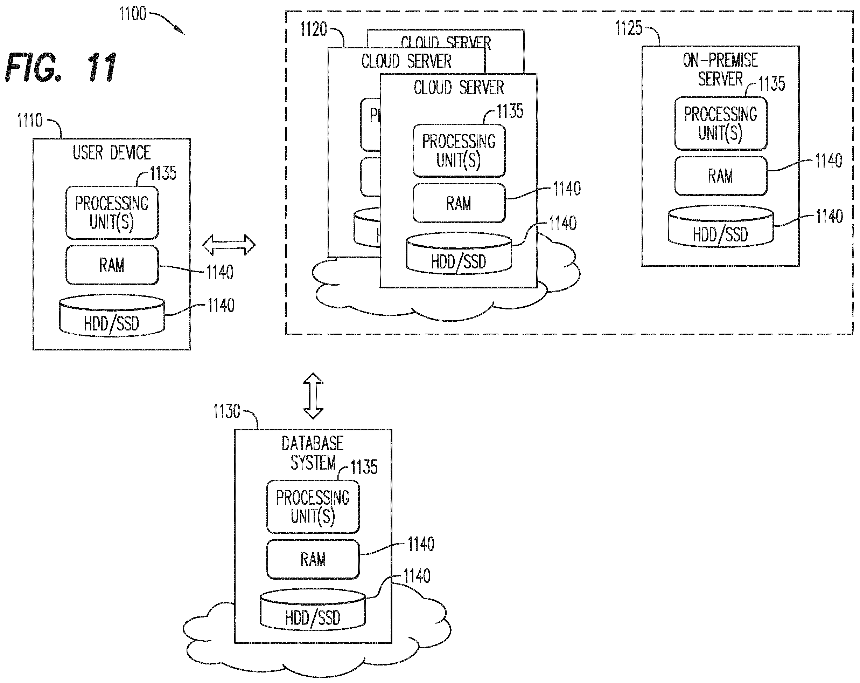

FIG. 2 illustrates a process 200 for generating an artifact in accordance with an example embodiment. The process 200 may be performed by a database node, a cloud platform, a server, a computing system (user device), a combination of devices/nodes, or the like, according to some embodiments. In one or more embodiments, the system architecture 100 may be conditioned to perform the process 200 such that a processing unit 1135 (FIG. 11) of the system architecture 100 is a special purpose element configured to perform operations not performable by a general-purpose computer or device.

All processes mentioned herein may be executed by various hardware elements and/or embodied in processor-executable program code read from one or more of non-transitory computer-readable media, such as a hard drive, a floppy disk, a CD-ROM, a DVD-ROM, a Flash drive, Flash memory, a magnetic tape, and solid state Random Access Memory (RAM) or Read Only Memory (ROM) storage units, and then stored in a compressed, uncompiled and/or encrypted format. In some embodiments, hard-wired circuitry may be used in place of, or in combination with, program code for implementation of processes according to some embodiments. Embodiments are therefore not limited to any specific combination of hardware and software.

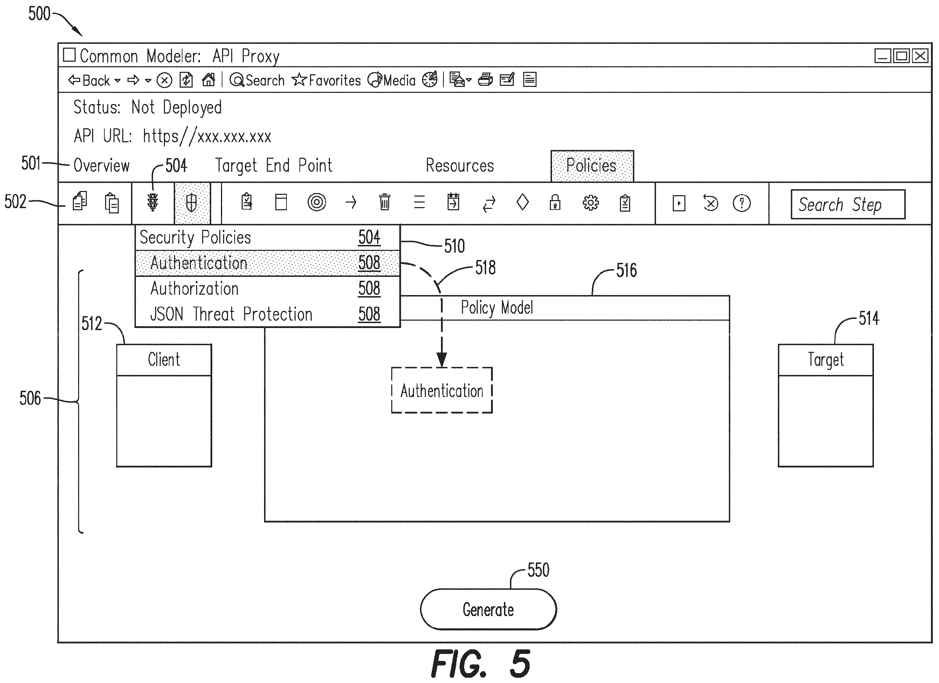

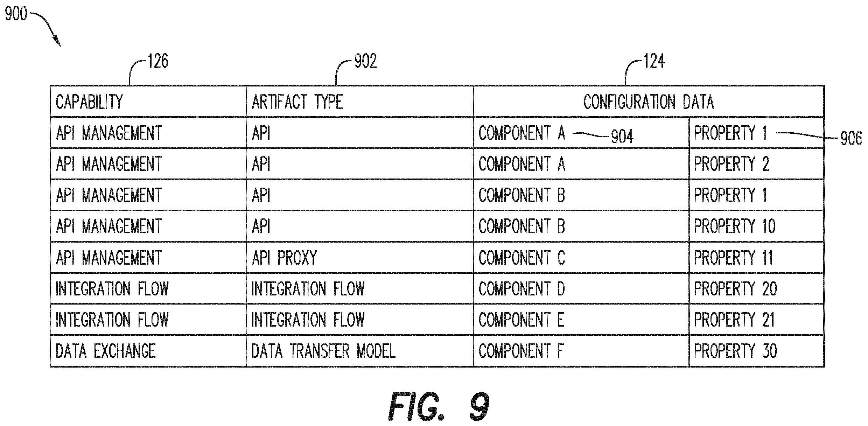

Prior to the process 200, the configuration data 124 may be mapped to each capability 126 and an artifact type 902 as shown in map 900 of FIG. 9. As described above, non-exhaustive examples of capabilities 126 are the API Management capability, the Integration Flow capability and the Data Exchange capability. As further described above, for each capability 126 there may be one or more artifact types 902 that may be output by execution of the capability. As a non-exhaustive example, for the API management capability 126, an artifact type 902 may be an API, an API proxy, etc.; for the Integration Flow capability 126, an artifact type 902 may be an integration flow; and for the Data Exchange capability, an artifact type 902 may be a data transfer model. The configuration data 124 may include a plurality of selectable components 904. The components 904 may include properties 906 that may further define the artifact type 902. The selectable components 904 may be displayed on the artifact generation user interface display 500, as described further below with respect to FIGS. 5-8. As a non-exhaustive example, for an API proxy, there may be a category item "Security Policy," which may include a plurality of components 904. As a non-exhaustive example, the "Security Policy" category item may have the following components 904: "authentication", "authorization" and "JSON Threat Protection." Each of these components 904 may have configurable properties 906. For the "authorization" component 904, the properties 906 may include a policy setting scope and a type (e.g., client certification and/or OAuth). For the API proxy, another category item may be "Traffic Management Policies" and one of the plurality of components 904 for this category may be "Quota." The properties 906 for the "Quota" component 904 may include, but are not limited to, an error instruction, a mode, a start time, the number of calls, a duration, a duration unit and a quota identifier. As another non-exhaustive example, for an integration flow, a category item may be "Transformation," which may include the components 904 of "converter", "decoder", "encoder", "extractor", "filter", and "content modifier". For the "Content Modifier" component 904, one of the properties 906 may be a condition for modifying the content (e.g., in a case the request includes X, replace X with y). For the integration flow, another category item may be a "Process", which may include the components 904 of "exception subprocess", "integration process", and "local integration process". As described above, this map 900 may be stored in the database 116 and accessed by the common modeler tool 104 during execution thereof.

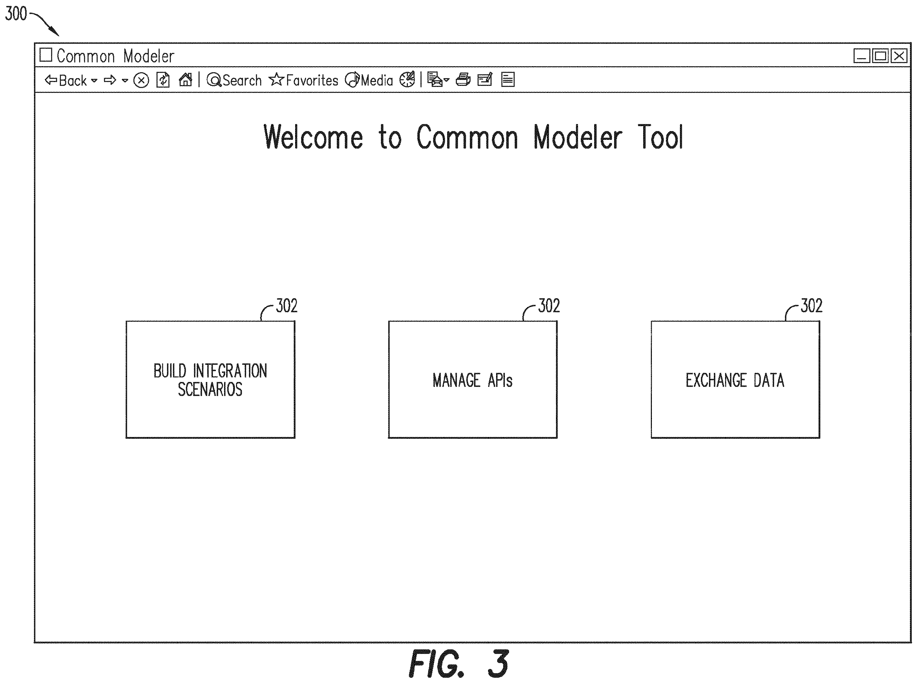

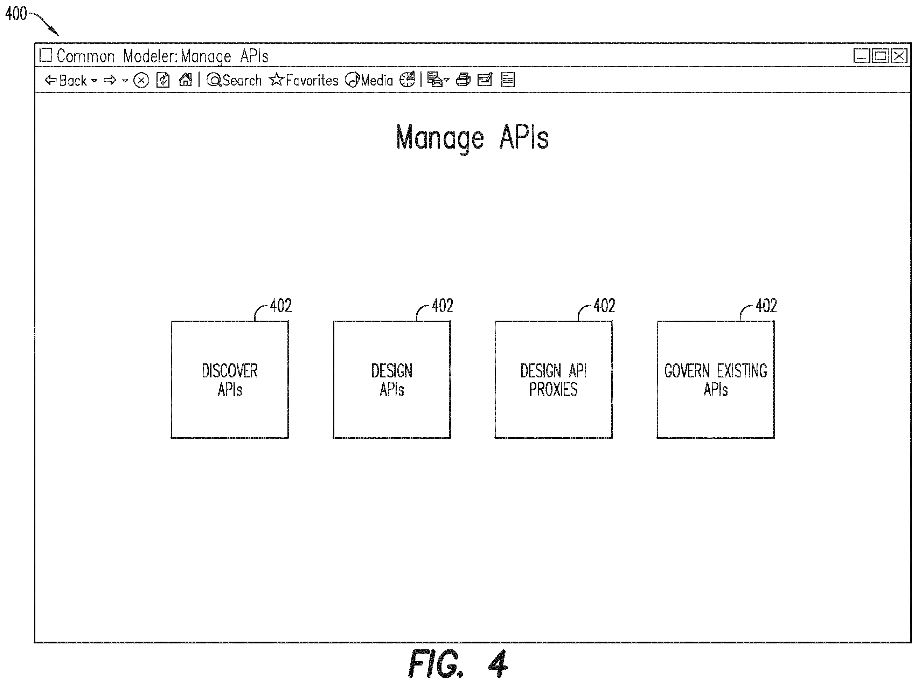

Turning to FIG. 2, initially, at S210, a Common Modeler Tool dashboard user interface (UI) 300 (FIG. 3) is generated. The Common Modeler Tool dashboard UI 300 may include a plurality of capability icons 302. Each capability icon 302 may represent a capability 126, as described above. As a non-exhaustive example to be used below, the "Manage APIs" capability icon 302 is selected. In response to selection of the capability icon 302, a Capability user interface display 400 (FIG. 4) is displayed in S212. The Capability UI display 400 may include one or more selectable artifact icons 402, representing an artifact type 902. Selection of the artifact icon 402 may transmit an artifact generating request in S214. It is noted that in some embodiments, the capability may itself represent an artifact type. In this case, the process may proceed directly from S210 to S214 without S212, whereby selection of the capability icon 302 may transmit the artifact generating request in S214. Based on the selected artifact type (or capability) included in the request, the common modeler tool 104 may access the map 900 to retrieve configuration data 124 for the selected artifact type in S216.

An artifact generation user interface display 500 (FIG. 5) is displayed in S218. The artifact generation user interface display 500 may be populated based on the retrieved configuration data 124. As described above, the configuration data 124 may include a plurality of selectable components 904. The components 904 may include properties 906 further defining the artifact type 902. Each component includes one or more sub-components. For the API proxy artifact, and the authentication policy component, each policy step, i.e., receive a token as part of a request, retrieve stored token information from receiver, compare received token with stored token information, determine authentication is valid or invalid based on comparison, is a sub-component.

The artifact generation user interface display 500 may include one or more selectable menu tabs 501. Selection of the menu tab 501 may allow the user to view and/or configure components. Here, the menu tabs are "Overview," "Target EndPoint", "Resources", and "Policies." As shown in FIG. 5, the "Policies" menu tab 501 is selected as indicated by the shading of the menu tab 501.

The artifact generation user interface display 500 may also include a configurable modeling palette 502 including a plurality of selectable palette item icons 504. The artifact generation user interface display 500 may also include a modeling canvas 506. The selectable palette item icons 504 may represent the category items described above. Each selectable palette item icon 504 may include one or more selectable components 508. It is noted that in some instances, the selectable palette item icon 504 may be the selectable component 508 itself. The selectable components 508 may be provided via a drop-down menu 510 or any other suitable display. The palette item icons 504 and associated selectable components 508 are populated on the artifact generation user interface display 500 based on the retrieved configuration data 124. Pursuant to some embodiments, the palette item icons 504 may be populated on the modeling canvas in response to selection of the artifact type and the particular palette item icons 504 that populated are based on the selected artifact type. The modeling canvas 506 may provide a visualization of a model, process, etc. The artifact model 125 may be designed by including a client, a target, one or more components and one or more flows on the modeling canvas as described further below. The modeling canvas 506 may be initially populated with a client 512, a target 514 and a build space 516. One or more components 508 associated with the artifact type are received on the modeling canvas 506 in S220. The components 508 may be received via a drag and drop action or any other suitable process.

As a non-exhaustive example shown herein, the "Security Policy" palette item icon 504 is selected, as indicated by the shading. Selection of the "Security Policy" palette item icon 504 may result in the drop-down menu 510 including the component 508: "Authentication", "Authorization" and "JSON Threat Protection." Here, the "Authentication" component 508 is selected as indicated by the shading. As described above, the user may select the "Authentication component" 508 and drag and drop it onto the modeling canvas 506 (in this case the build space 516), as indicated by the curved dotted arrow 518. Here, the "Authentication" component 508 is the first component of the artifact model 125.

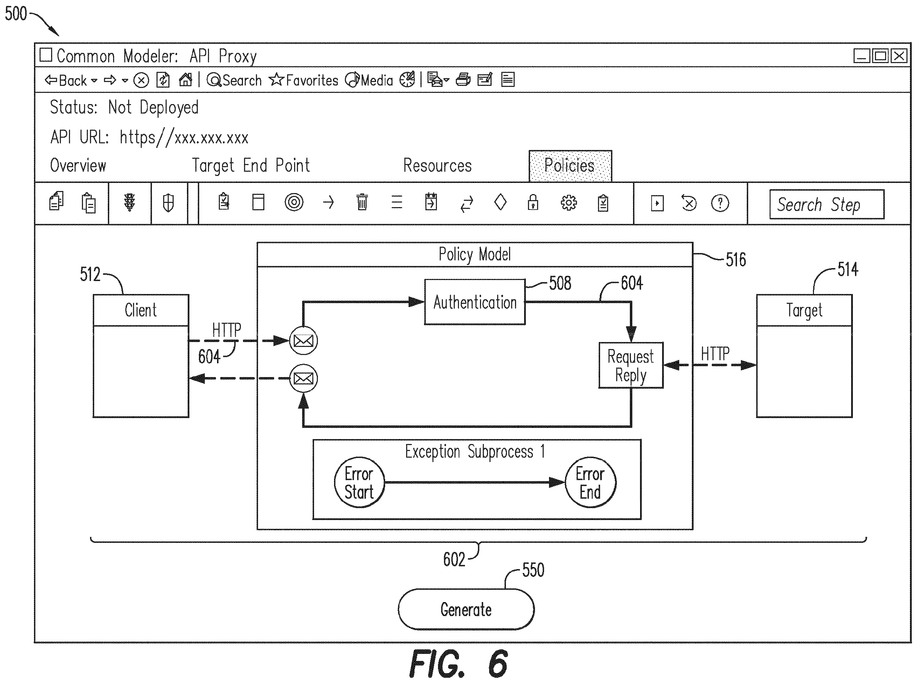

In S222 a flow 602 (FIG. 6) for the artifact model 125 is received. The flow 602 may include links 604 between the client 512, one or more components 508 in the build space 516 and the target 514 to connect (link) the elements of the artifact model 125. It is noted that in some instances, a link 604 may be received between the client 512 and the build space 516 and/or the build space 516 and the target 514 before any components are received in the build space 516. As shown in FIG. 6, the link 604 may be represented by a dotted arrow or a solid arrow. Here, the client 512 is linked to a first message component 508, which is in turn linked to an authentication component 508, which in turn is linked to a request reply component 508. The request reply component 508 is linked to both the target 514 and a second message component 508. The second message component 508 is linked to the client 512. It is noted that the flow 602 may include components 508 within the build space 516 that are not linked to other components/client/target but are still part of the flow 602. Here, the "Exception Subprocess 1" component 508 is part of the flow 602, but is not directly linked via links 604 to other components/client/target. In this flow 602, the client 512 sends a message (message component) that is received by the authentication component. After a successful authentication, the authentication component transmits a request reply to the target 514 via the request reply component 508. The target 514 generates a response and returns the response to the reply request component 508. The reply request component 508 transmits the response message (second message component) back to the client 512. In a case authentication was unsuccessful, for example, the exception subprocess 1 component may execute based on configurable properties, as described further below.

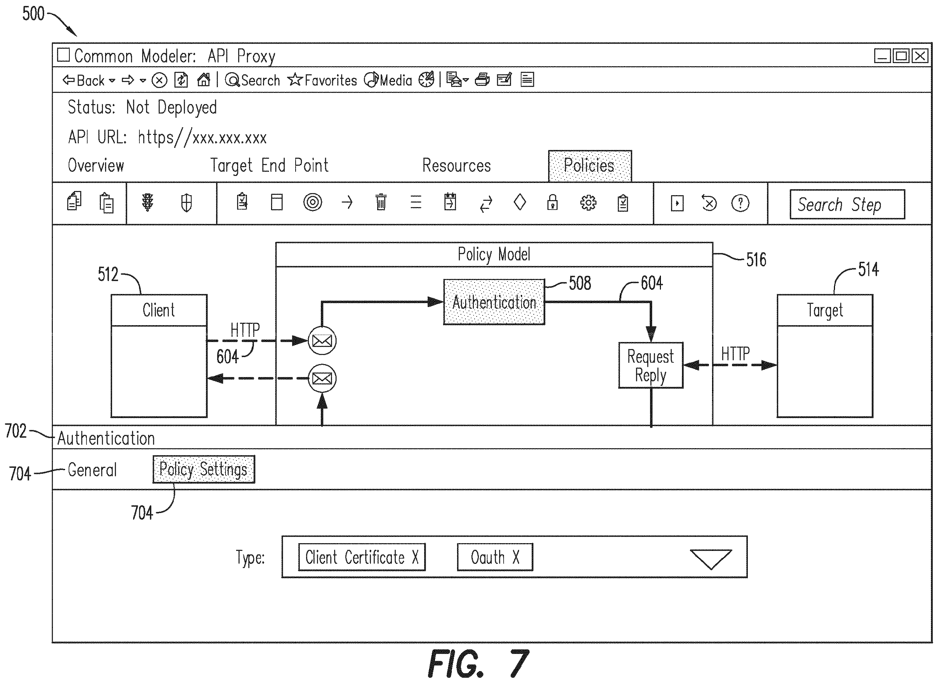

Turning to S224, one or more properties 906 may be defined for each received component and each received link. Non-exhaustive examples of properties 906 that may be defined for each link may be a type of communication protocol between at least one of: (i) the client and a component, (ii) the target and the component, and (iii) a first component and a second component. The communication protocol may include, but is not limited to, HTTP, HTTPS, JSON, XML, etc. Selection of a component 508 (or link 604) may result in the display of a property sheet 702, as shown in FIG. 7.

The property sheet 702 (FIG. 7) may be a pop-up window or otherwise displayed in response to selection of the component 508 on the modeling canvas 506. Here, the "Authentication" component 508 is selected, as indicated by the shading, resulting in the display of the property sheet 702. The configuration properties displayed on the property sheet 702 are based on the configuration data 124 from the map 900. The property sheet 702 may include one or more categories 704 of properties for configuration. Here, there is a "General" category 704 and a "Policy Setting" category 704. The "Policy Setting" category 704 is selected, as indicated by the shading, resulting in the display of one or more policy setting properties for configuration (e.g., Type, etc.). In this case, the policy setting property type is defined as: a Client Certificate and an Oauth. Other suitable types of policy setting properties may be provided.

It is noted that while the above process describes receipt of the flow (S222) preceding the definition of the properties (S224), these steps may be reversed and the properties for each component may be defined prior to receipt of the flow 602, or the properties for one or more components may be defined, then a flow is received and then other properties may be defined, etc. For example, after the component 508 is received by the build space 516, defined properties 906 may be received for that component 508 before any further component or link is received by the modeling canvas 506. Similarly, in some cases the properties for each link may be defined prior to receipt of the flow 602. For example, before a component is received in the build space 516, a link 604 may be received between the client 512 and the build space 516 and/or the build space 516 and the target 514. At this stage, the properties 906 may be defined for the link.

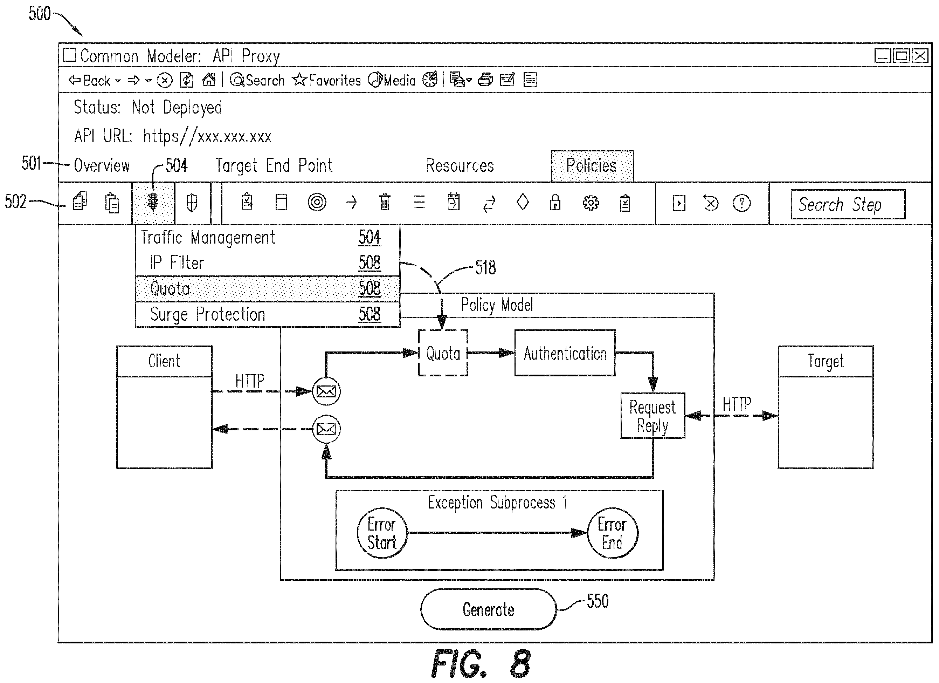

Continuing with the above example, after the properties for the "Authentication" component 508 are defined in S224, another component may be received by the modeling canvas 506, as shown in FIG. 8. Here, the "Traffic Management" palette item icon 504 is selected, as indicated by the shading. Selection of the "Traffic Management" palette item icon 504 may result in the drop-down menu 510 including the following components 508: "IP Filter", "Quota" and "Surge Protection." Here, the "Quota" component 508 is selected as indicated by the shading, and dragged and dropped onto the modeling canvas, as indicated by the curved dotted arrow 518.

Turning back to the process 200, after the one or more components, flow and property definitions have been added to the modeling canvas 506, the artifact model may be complete. The artifact 122 may be generated for the artifact model 125 in S226 via the generation component 106 in response to selection of a "Generate" icon 550. The artifact 122 may be stored in the database 116 in S228.

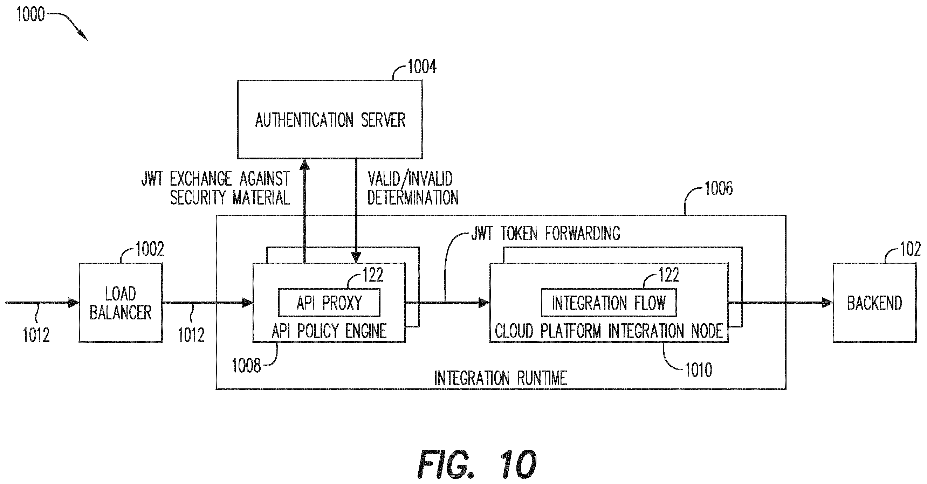

FIG. 10 provides a block diagram of a runtime architecture 1000 for deployment of an artifact in accordance with an example embodiment. While the runtime architecture 1000 shown in FIG. 10 is for an API proxy, continuing the above example, the runtime architecture may be applicable to other artifacts. The runtime architecture 1000 may include a load balancer 1002, an Authentication server 1004, an integration runtime 1006 and the backend server 102. The load balancer 1002 may efficiently distribute incoming network traffic across a group of backend servers. The integration runtime 1006 may provide a compute environment where an activity is either run directly or dispatched. Here, the integration runtime 1006 may include an API policy engine 1008 and a cloud platform integration node 1010. During a runtime, the load balancer 1002 may receive a Uniform Resource Locator (URL) request 1012 and identify a backend server 102 to receive the URL request 1012. The load balancer 1002 may forward the URL request 1012 to the API policy engine 1008 to execute the policies for the Security policy defined above. Keeping with the above-described example, the API proxy includes an authentication component defined such that the API policy engine 1008 may exchange a Jason Web Token (JWT) against security material of the Authentication server 1004. In a case the Authentication server 1004 determines the exchanged material is valid, the API policy engine 1008 may forward the JWT to the cloud platform integration node 1010. The cloud platform integration node 1010 may then execute integration steps of an integration flow (not shown). The integration flow may be another artifact generated by the process 200 described above. Execution of the integration steps may include access to the backend server 102.

FIG. 11 illustrates a cloud-based database deployment 1100 according to some embodiments. The illustrated components may reside in one or more public clouds providing self-service and immediate provisioning, autoscaling, security, compliance and identity management features.

User device 1110 may interact with applications executing on one of the cloud application server 1120 or on-premise application server 1125, for example via a Web Browser executing on user device 1110, in order to create, read, update and delete data managed by database system 1130. Database system 1130 may store data as described herein and may execute processes as described herein to cause the execution of the common modeler tool 104 for use with the user device 1110. Cloud application server 1120 and database system 1130 may comprise cloud-based compute resources, such as virtual machines, allocated by a public cloud provider. As such, cloud application server 1120 and database system 1130 may be subjected to demand-based resource elasticity. Each of the user device 1110, cloud application server 1120, on-premise application server 1125 and database system 1130 may include a processing unit 1135 that may include one or more processing devices each including one or more processing cores. In some examples, the processing unit 1135 is a multicore processor or a plurality of multicore processors. Also, the processing unit 1135 may be fixed or it may be reconfigurable. The processing unit 1135 may control the components of any of the user device 1110, cloud application server 1120, on-premise application server 1125 and database system 1130. The storage device 1140 may not be limited to a particular storage device and may include any known memory device such as RAM, ROM, hard disk, and the like, and may or may not be included within a database system, a cloud environment, a web server or the like. The storage device 1140 may store software modules or other instructions/executable code which can be executed by the processing unit 1135 to perform the process shown in FIG. 2. According to various embodiments, the storage device 1140 may include a data store having a plurality of tables, records, partitions and sub-partitions. The storage device 1140 may be used to store database records, documents, entries, and the like.

As will be appreciated based on the foregoing specification, the above-described examples of the disclosure may be implemented using computer programming or engineering techniques including computer software, firmware, hardware or any combination or subset thereof. Any such resulting program, having computer-readable code, may be embodied or provided within one or more non- transitory computer-readable media, thereby making a computer program product, i.e., an article of manufacture, according to the discussed examples of the disclosure. For example, the non-transitory computer-readable media may be, but is not limited to, a fixed drive, diskette, optical disk, magnetic tape, flash memory, external drive, semiconductor memory such as read-only memory (ROM), random-access memory (RAM), and/or any other non-transitory transmitting and/or receiving medium such as the Internet, cloud storage, the Internet of Things (IoT), or other communication network or link. The article of manufacture containing the computer code may be made and/or used by executing the code directly from one medium, by copying the code from one medium to another medium, or by transmitting the code over a network.

The computer programs (also referred to as programs, software, software applications, "apps", or code) may include machine instructions for a programmable processor and may be implemented in a high-level procedural and/or object-oriented programming language, and/or in assembly/machine language. As used herein, the terms "machine-readable medium" and "computer-readable medium" refer to any computer program product, apparatus, cloud storage, internet of things, and/or device (e.g., magnetic discs, optical disks, memory, programmable logic devices (PLDs)) used to provide machine instructions and/or data to a programmable processor, including a machine-readable medium that receives machine instructions as a machine-readable signal. The "machine-readable medium" and "computer-readable medium," however, do not include transitory signals. The term "machine-readable signal" refers to any signal that may be used to provide machine instructions and/or any other kind of data to a programmable processor.

The above descriptions and illustrations of processes herein should not be considered to imply a fixed order for performing the process steps. Rather, the process steps may be performed in any order that is practicable, including simultaneous performance of at least some steps.

## Claims

1. A system comprising:
a memory storing processor-executable program code; and
a processing unit to execute the processor-executable program code to cause the system to:
receive an artifact generating request;
receive a selection of an artifact type (902);
generate (S218) a user interface display (500) including a modeling canvas (506), the modeling canvas (506) including a client (512), a target (514) and a build space (516);
receive (S220) one or more components (508, 904) associated with the artifact type (902) on the modeling canvas (506), wherein the components (508, 904) are populated on the generated modeling canvas (506) in response to received selection of the artifact type (902);
receive (S222) a flow (602) for the artifact type (902), the flow (602) including a first link (604) of the client (512) to a first component (508) of the one or more components (508, 904) and a second link (604) of the target (514) to one of the one or more components (508, 904);
define (S224) properties (906) for each received component (508, 904) and each link (604);
generate (S226) an artifact (122); and
store (S228) the artifact (122);
wherein the processor-executable program code further causes the system to:
receive one or more sub-components for each component (508, 904),
wherein the artifact (122) is an Application Programming Interface "API" proxy, the first component (508) is an authentication policy component, and each sub-component is a policy step, and
wherein the policy steps comprise receiving a token as part of a request, retrieving stored token information from a receiver, comparing the received token with stored token information, and determining whether authentication is valid or invalid based on the comparison.

2. The system of claim 1, wherein the properties (906) defined for the link define a type of communication protocol between at least one of: (i) the client (512) and the first component, (ii) the target (514) and the first component, and (iii) the first component (508) and a second component.

3. The system of claim 1 or 2, further comprising processor-executable program code to cause the system to deploy the artifact (122).

4. The system of any one of claims 1 to 3, wherein each component is represented on the modeling canvas (506) by a palette item icon;
wherein, optionally, the palette item icons are populated on the modeling canvas (506) in response to selection of the artifact type (902);
wherein, optionally, the palette item icons are based on the selected artifact type (902).

5. A method comprising:
receiving an artifact generating request;
receiving a selection of an artifact type (902);
generating (S218) a user interface display (500) including a modeling canvas (506), the modeling canvas (506) including a client (512), a target (514) and a build space (516);
receiving (S220) one or more components (508, 904) associated with the artifact type (902) on the modeling canvas (506), wherein the components (508, 904) are populated on the generated modeling canvas (506) in response to received selection of the artifact type (902);
receiving (S222) a flow (602) for the artifact type (902), the flow (602) including a first link (604) of the client (512) to a first component (508) of the one or more components (508, 904) and a second link (604) of the target (514) to one of the one or more components (508, 904);
defining (S224) properties (906) for each received component and each link;
generating (S226) an artifact (122); and
storing (S228) the artifact (122);
the method further comprising:
receiving one or more sub-components for each component (508, 904),
wherein the artifact (122) is an Application Programming Interface "API" proxy, the first component (508) is an authentication policy component, and each sub-component is a policy step, and
wherein the policy steps comprise receiving a token as part of a request, retrieving stored token information from a receiver, comparing the received token with stored token information, and determining whether authentication is valid or invalid based on the comparison.

6. The method of claim 5, wherein the properties (906) defined for the link define a type of communication protocol between at least one of: (i) the client (512) and the first component, (ii) the target (514) and the first component, and (iii) the first component (508) and a second component.

7. The method of claim 5 or 6, further comprising:
deploying the artifact (122).

8. The method of any one of claims 5 to 7, wherein each component is represented on the modeling canvas (506) by a palette item icon.

9. The method of claim 8, wherein the palette item icons are based on the selected artifact type (902).

10. A non-transitory computer readable medium having executable instructions stored therein which, when executed, perform a method comprising:
receiving an artifact generating request;
receiving selection of an artifact type (902);
generating (S218) a user interface display (500) including a modeling canvas (506), the modeling canvas (506) including a client (512), a target (514) and a build space (516);
receiving (S220) one or more components (508, 904) associated with the artifact type (902) on the modeling canvas (506), wherein the components (508, 904) are populated on the generated modeling canvas (506) in response to received selection of the artifact type (902);
receiving (S222) a flow (602) for the artifact type (902), the flow (602) including a first link (604) of the client (512) to a first component (508) of the one or more components (508, 904) and a second link (604) of the target (514) to one of the one or more components (508, 904);
defining (S224) properties (906) for each received component and each link;
generating (S226) an artifact (122); and
storing (S228) the artifact (122);
the method further comprising:
receiving one or more sub-components for each component (508, 904),
wherein the artifact (122) is an Application Programming Interface "API" proxy, the first component (508) is an authentication policy component, and each sub-component is a policy step, and
wherein the policy steps comprise receiving a token as part of a request, retrieving stored token information from a receiver, comparing the received token with stored token information, and determining whether authentication is valid or invalid based on the comparison.

11. The medium of claim 10, wherein the method performed by the executable instructions further comprises:
deploying the artifact (122).

## Patentansprüche

1. System, umfassend:
einen Speicher, der Prozessor-ausführbaren Programmcode speichert; und
eine Verarbeitungseinheit zum Ausführen des Prozessor-ausführbaren Programmcodes zum Bewirken, dass das System ausführt:
Empfangen einer Artefakt-erzeugenden Anfrage;
Empfangen einer Auswahl eines Artefakt-Typs (902);
Erzeugen (S218) einer Benutzerschnittstellenanzeige (500), die einen Modellierungs-Canvas (506) umfasst, wobei der Modellierungs-Canvas (506) einen Client (512), ein Ziel (514) und einen Aufbauraum (516) umfasst;
Empfangen (S220) einer oder mehrerer Komponente(n) (508, 904), die mit dem Artefakt-Typ (902) auf dem Modellierungs-Canvas (506) zusammenhängt/hängen, wobei die Komponenten (508, 904) auf dem erzeugten Modellierungs-Canvas (506) als Reaktion auf die empfangene Auswahl des Artefakt-Typs (902) eingetragen werden;
Empfangen (S222) eines Stroms (602) für den Artefakt-Typ (902), wobei der Strom (602) eine erste Verknüpfung (604) des Clients (512) mit einer ersten Komponente (508) der einen oder mehreren Komponente(n) (508, 904) und eine zweite Verknüpfung (604) des Ziels (514) mit einer der einen oder mehreren Komponente(n) (508, 904) umfasst;
Festlegen (S224) von Eigenschaften (906) für jede empfangene Komponente (508, 904) und jede Verknüpfung (604);
Erzeugen (S226) eines Artefakts (122); und
Speichern (S228) des Artefakts (122);
wobei der Prozessor-ausführbare Programmcode ferner bewirkt, dass das System folgendes ausführt:
Empfangen einer oder mehrerer Teilkomponente(n) für jede Komponente (508, 904),
wobei das Artefakt (122) ein Anwendungsprogrammierschnittstellen "API"-Proxy ist, wobei die erste Komponente (508) eine Authentifizierungsrichtlinienkomponente ist und jede Teilkomponente ein Richtlinienschritt ist, und
wobei die Richtlinienschritte das Empfangen eines Token als Teil einer Anfrage, das Abfragen von gespeicherten Tokeninformationen von einem Empfänger, das Vergleichen des empfangenen Token mit gespeicherten Tokeninformationen und das Bestimmen, ob das Authentifizieren gültig oder ungültig ist, auf der Basis des Vergleichs umfassen.

2. System nach Anspruch 1, wobei die Eigenschaften (906), die für die Verknüpfung festgelegt sind, einen Typ von Kommunikationsprotokoll zwischen mindestens einem von: (i) dem Client (512) und der ersten Komponente, (ii) dem Ziel (514) und der ersten Komponente und (iii) der ersten Komponente (508) und einer zweiten Komponente, festlegen.

3. System nach Anspruch 1 oder 2, ferner umfassend Prozessor-ausführbaren Programmcode zum Bewirken, dass das System das Artefakt (122) anwendet.

4. System nach einem der Ansprüche 1 bis 3, wobei jede Komponente auf dem Modellierungs-Canvas (506) durch ein Palettengegenstand-Icon dargestellt ist;
wobei die Palettengegenstand-Icons gegebenenfalls auf dem Modellierungs-Canvas (506) als Reaktion auf die Auswahl des Artefakt-Typs (902) eingetragen werden;
wobei die Palettengegenstand-Icons gegebenenfalls auf dem ausgewählten Artefakt-Typ (902) basieren.

5. Verfahren, umfassend:
Empfangen einer Artefakt-erzeugenden Anfrage;
Empfangen einer Auswahl eines Artefakt-Typs (902);
Erzeugen (S218) einer Benutzerschnittstellenanzeige (500), die einen Modellierungs-Canvas (506) umfasst, wobei der Modellierungs-Canvas (506) einen Client (512), ein Ziel (514) und einen Aufbauraum (516) umfasst;
Empfangen (S220) einer oder mehrerer Komponente(n) (508, 904), die mit dem Artefakt-Typ (902) auf dem Modellierungs-Canvas (506) zusammenhängt/hängen, wobei die Komponenten (508, 904) auf dem erzeugten Modellierungs-Canvas (506) als Reaktion auf die empfangene Auswahl des Artefakt-Typs (902) eingetragen werden;
Empfangen (S222) eines Stroms (602) für den Artefakt-Typ (902), wobei der Strom (602) eine erste Verknüpfung (604) des Clients (512) mit einer ersten Komponente (508) der einen oder mehreren Komponente(n) (508, 904) und eine zweite Verknüpfung (604) des Ziels (514) mit einer der einen oder mehreren Komponente(n) (508, 904) umfasst;
Festlegen (S224) von Eigenschaften (906) für jede empfangene Komponente und jede Verknüpfung;
Erzeugen (S226) eines Artefakts (122); und
Speichern (S228) des Artefakts (122);
wobei das Verfahren ferner umfasst:
Empfangen einer oder mehrerer Teilkomponente(n) für jede Komponente (508, 904),
wobei das Artefakt (122) ein Anwendungsprogrammierschnittstellen "API"-Proxy ist, wobei die erste Komponente (508) eine Authentifizierungsrichtlinienkomponente ist und jede Teilkomponente ein Richtlinienschritt ist, und
wobei die Richtlinienschritte das Empfangen eines Token als Teil einer Anfrage, das Abfragen von gespeicherten Tokeninformationen von einem Empfänger, das Vergleichen des empfangenen Token mit gespeicherten Tokeninformationen und das Bestimmen, ob das Authentifizieren gültig oder ungültig ist, auf der Basis des Vergleichs umfassen.

6. Verfahren nach Anspruch 5, wobei die Eigenschaften (906), die für die Verknüpfung festgelegt sind, einen Typ von Kommunikationsprotokoll zwischen mindestens einem von: (i) dem Client (512) und der ersten Komponente, (ii) dem Ziel (514) und der ersten Komponente und (iii) der ersten Komponente (508) und einer zweiten Komponente, festlegen.

7. Verfahren nach Anspruch 5 oder 6, ferner umfassend:
Anwenden des Artefakts (122).

8. Verfahren nach einem der Ansprüche 5 bis 7, wobei jede Komponente auf dem Modellierungs-Canvas (506) durch ein Palettengegenstand-Icon dargestellt ist.

9. Verfahren nach Anspruch 8, wobei die Palettengegenstand-Icons auf dem ausgewählten Artefakt-Typ (902) basieren.

10. Nicht-flüchtiges computerlesbares Medium, in dem ausführbare Anweisungen gespeichert sind, die, wenn sie ausgeführt werden, ein Verfahren durchführen, umfassend:
Empfangen einer Artefakt-erzeugenden Anfrage;
Empfangen einer Auswahl eines Artefakt-Typs (902);
Erzeugen (S218) einer Benutzerschnittstellenanzeige (500), die einen Modellierungs-Canvas (506) umfasst, wobei der Modellierungs-Canvas (506) einen Client (512), ein Ziel (514) und einen Aufbauraum (516) umfasst;
Empfangen (S220) einer oder mehrerer Komponente(n) (508, 904), die mit dem Artefakt-Typ (902) auf dem Modellierungs-Canvas (506) zusammenhängt/hängen, wobei die Komponenten (508, 904) auf dem erzeugten Modellierungs-Canvas (506) als Reaktion auf die empfangene Auswahl des Artefakt-Typs (902) eingetragen werden;
Empfangen (S222) eines Stroms (602) für den Artefakt-Typ (902), wobei der Strom (602) eine erste Verknüpfung (604) des Clients (512) mit einer ersten Komponente (508) der einen oder mehreren Komponente(n) (508, 904) und eine zweite Verknüpfung (604) des Ziels (514) mit einer der einen oder mehreren Komponente(n) (508, 904) umfasst;
Festlegen (S224) von Eigenschaften (906) für jede empfangene Komponente und jede Verknüpfung;
Erzeugen (S226) eines Artefakts (122); und
Speichern (S228) des Artefakts (122);
wobei das Verfahren ferner umfasst:
Empfangen einer oder mehrerer Teilkomponente(n) für jede Komponente (508, 904),
wobei das Artefakt (122) ein Anwendungsprogrammierschnittstellen "API"-Proxy ist, wobei die erste Komponente (508) eine Authentifizierungsrichtlinienkomponente ist und jede Teilkomponente ein Richtlinienschritt ist, und
wobei die Richtlinienschritte das Empfangen eines Token als Teil einer Anfrage, das Abfragen von gespeicherten Tokeninformationen von einem Empfänger, das Vergleichen des empfangenen Token mit gespeicherten Tokeninformationen und das Bestimmen, ob das Authentifizieren gültig oder ungültig ist, auf der Basis des Vergleichs umfassen.

11. Medium nach Anspruch 10, wobei das Verfahren, das durch die ausführbaren Anweisungen durchgeführt wird, ferner umfasst:
Anwenden des Artefakts (122).

## Revendications

1. Système comprenant :
une mémoire stockant du code de programme exécutable par un processeur ; et
un module de traitement pour exécuter le code de programme exécutable par un processeur pour amener le système à :
recevoir une requête de génération d'artéfact ;
recevoir une sélection d'un type d'artéfact (902) ;
générer (S218) un affichage d'interface utilisateur (500) incluant un canevas de modélisation (506), le canevas de modélisation (506) incluant un client (512), une cible (514) et un espace de construction (516) ;
recevoir (S220) un ou plusieurs composants (508, 904) associés au type d'artéfact (902) sur le canevas de modélisation (506), dans lequel les composants (508, 904) sont peuplés sur le canevas de modélisation généré (506) en réponse à la sélection reçue du type d'artéfact (902) ;
recevoir (S222) un flux (602) pour le type d'artéfact (902), le flux (602) incluant un premier lien (604) du client (512) à un premier composant (508) du ou des composants (508, 904) et un second lien (604) de la cible (514) à un du ou des composants (508, 904) ;
définir (S224) des propriétés (906) pour chaque composant reçu (508, 904) et chaque lien (604) ;
générer (S226) un artéfact (122) ; et
stocker (S228) l'artéfact (122) ;
dans lequel le code de programme exécutable par un processeur amène en outre le système à :
recevoir un ou plusieurs composants secondaires pour chaque composant (508, 904),
dans lequel l'artéfact (122) est un mandataire d'interface de programmation d'application « API », le premier composant (508) est un composant de politique d'authentification et chaque composant secondaire est une étape de politique, et dans lequel les étapes de politique comprennent
recevoir un jeton dans le cadre d'une requête, récupérer des informations de jeton stockées d'un destinataire, comparer le jeton reçu à des informations de jeton stockées et déterminer si une authentification est valide ou invalide en fonction de la comparaison.

2. Système selon la revendication 1, dans lequel les propriétés (906) définies pour le lien définissent un type de protocole de communication entre au moins un élément parmi : (i) le client (512) et le premier composant, (ii) la cible (514) et le premier composant, et (iii) le premier composant (508) et un second composant.

3. Système selon la revendication 1 ou 2, comprenant en outre du code de programme exécutable par un processeur pour amener le système à déployer l'artéfact (122).

4. Système selon l'une quelconque des revendications 1 à 3, dans lequel chaque composant est représenté sur le canevas de modélisation (506) par une icône d'élément de palette ;
dans lequel, en option, les icônes d'élément de palette sont peuplées sur le canevas de modélisation (506) en réponse à la sélection du type d'artéfact (902) ;
dans lequel, en option, les icônes d'élément de palette sont basées sur le type d'artéfact sélectionné (902).

5. Procédé comprenant :
recevoir une requête de génération d'artéfact ;
recevoir une sélection d'un type d'artéfact (902) ;
générer (S218) un affichage d'interface utilisateur (500) incluant un canevas de modélisation (506), le canevas de modélisation (506) incluant un client (512), une cible (514) et un espace de construction (516) ;
recevoir (S220) un ou plusieurs composants (508, 904) associés au type d'artéfact (902) sur le canevas de modélisation (506), dans lequel les composants (508, 904) sont peuplés sur le canevas de modélisation généré (506) en réponse à la sélection reçue du type d'artéfact (902) ;
recevoir (S222) un flux (602) pour le type d'artéfact (902), le flux (602) incluant un premier lien (604) du client (512) à un premier composant (508) du ou des composants (508, 904) et un second lien (604) de la cible (514) à un du ou des composants (508, 904) ;
définir (S224) des propriétés (906) pour chaque composant reçu et chaque lien ;
générer (S226) un artéfact (122) ; et
stocker (S228) l'artéfact (122) ;
le procédé comprenant en outre :
recevoir un ou plusieurs composants secondaires pour chaque composant (508, 904),
dans lequel l'artéfact (122) est un mandataire d'interface de programmation d'application « API », le premier composant (508) est un composant de politique d'authentification et chaque composant secondaire est une étape de politique, et dans lequel les étapes de politique comprennent
recevoir un jeton dans le cadre d'une requête, récupérer des informations de jeton stockées d'un destinataire, comparer le jeton reçu à des informations de jeton stockées et déterminer si une authentification est valide ou invalide en fonction de la comparaison.

6. Procédé selon la revendication 5, dans lequel les propriétés (906) définies pour le lien définissent un type de protocole de communication entre au moins un élément parmi : (i) le client (512) et le premier composant, (ii) la cible (514) et le premier composant, et (iii) le premier composant (508) et un second composant.

7. Procédé selon la revendication 5 ou 6, comprenant en outre :
déployer l'artéfact (122).

8. Procédé selon l'une quelconque des revendications 5 à 7, dans lequel chaque composant est représenté sur le canevas de modélisation (506) par une icône d'élément de palette.

9. Procédé selon la revendication 8, dans lequel les icônes d'élément de palette sont basées sur le type d'artéfact sélectionné (902).

10. Support non transitoire lisible par ordinateur ayant des instructions exécutables stockées en son sein qui, lors de leur exécution, réalisent un procédé comprenant :
recevoir une requête de génération d'artéfact ;
recevoir une sélection d'un type d'artéfact (902) ;
générer (S218) un affichage d'interface utilisateur (500) incluant un canevas de modélisation (506), le canevas de modélisation (506) incluant un client (512), une cible (514) et un espace de construction (516) ;
recevoir (S220) un ou plusieurs composants (508, 904) associés au type d'artéfact (902) sur le canevas de modélisation (506), dans lequel les composants (508, 904) sont peuplés sur le canevas de modélisation généré (506) en réponse à la sélection reçue du type d'artéfact (902) ;
recevoir (S222) un flux (602) pour le type d'artéfact (902), le flux (602) incluant un premier lien (604) du client (512) à un premier composant (508) du ou des composants (508, 904) et un second lien (604) de la cible (514) à un du ou des composants (508, 904) ;
définir (S224) des propriétés (906) pour chaque composant reçu et chaque lien ;
générer (S226) un artéfact (122) ; et
stocker (S228) l'artéfact (122) ;
le procédé comprenant en outre :
recevoir un ou plusieurs composants secondaires pour chaque composant (508, 904),
dans lequel l'artéfact (122) est un mandataire d'interface de programmation d'application « API », le premier composant (508) est un composant de politique d'authentification et chaque composant secondaire est une étape de politique, et dans lequel les étapes de politique comprennent
recevoir un jeton dans le cadre d'une requête, récupérer des informations de jeton stockées d'un destinataire, comparer le jeton reçu à des informations de jeton stockées et déterminer si une authentification est valide ou invalide en fonction de la comparaison.

11. Support selon la revendication 10, dans lequel le procédé réalisé par les instructions exécutables comprend en outre :
déployer l'artéfact (122).
